# FASCICULE DE BREVET EUROPEEN

(11) **EP 1 909 150 B1**
(45) Date de publication et mention de la délivrance du brevet: **07.01.2009**
(21) Numéro de dépôt: 06121684.2
(22) Date de dépôt: 03.10.2006
(51) Int. Cl.: G04C 3/14, G01D 5/249

(54) **Pièce d'horlogerie comportant des moyens pour déterminer la position angulaire d'un indicateur analogique de cette pièce d'horlogerie**
Uhr, die Mittel zur Bestimmung der Drehstellung eines analogen Anzeigeelementes der Uhr aufweist
Timepiece comprising means for determining the angular position of an analog indicating member of said timepiece

(43) Date de publication de la demande: 09.04.2008
(73) Titulaire: The Swatch Group Research and Development Ltd., 2074 Marin (CH)
(72) Inventeur: Dinger, Rudolf, 2024, Saint-Aubin (CH)
(74) Mandataire: Ravenel, Thierry Gérard Louis

(56) Documents cités:
- EP-A- 1 662 343
- DE-A1- 3 513 961
- US-A- 4 645 357

## Description

La présente invention concerne généralement les pièces d'horlogerie pourvues de moyens d'affichage analogiques comprenant au moins un indicateur mobile, et qui comportent des moyens de détection des pas effectués par l'indicateur mobile. La présente invention concerne plus particulièrement de telles pièces d'horlogerie dans lesquelles la détection des pas est utilisée pour contrôler la position de l'indicateur mobile.

On connaît des pièces d'horlogerie électroniques à affichage analogique qui, en plus des aiguilles tournant au dessus du cadran, comportent un garde-temps numérique interne. Ce garde-temps interne est cadencé par les mêmes impulsions électriques qui commandent l'avance des aiguilles. Dans ces conditions, les aiguilles et le garde-temps avancent en principe de façon synchrone. Il est notamment connu d'utiliser un tel garde-temps interne dans des montres multifonctions où les mêmes aiguilles sont prévues pour indiquer alternativement l'heure ou une deuxième information, comme par exemple une heure de réveil. En effet, un garde-temps interne est nécessaire si l'on veut pouvoir continuer à compter le temps écoulé pendant que les aiguilles sont occupées par l'affichage de la deuxième information. Lorsque les aiguilles reviennent ensuite à leur fonction d'affichage de l'heure, les informations contenues dans le garde-temps interne leurs permettent de se remettre correctement à l'heure.

Toutefois, si l'on veut qu'une application comme celle qui vient d'être mentionnée donne satisfaction, il faut être en mesure d'empêcher l'apparition d'un éventuel décalage entre l'heure affichée par les aiguilles de la montre et l'heure donnée par le garde-temps interne. Or, on sait qu'un tel décalage peut se produire par exemple si la montre subit un choc ou en raison d'une perturbation électromagnétique ou même mécanique (poussières dans le rouage par exemple). En raison de ces perturbations les moteurs de certaines pièces d'horlogerie perdent des pas. Toute pièce d'horlogerie analogique est donc susceptible de présenter un décalage entre le comptage des impulsions de commande et la position angulaire des aiguilles. Si ce décalage n'est pas corrigé à temps, il peut s'accroître au point de conduire à des indications totalement erronées.

D'autre part, dans les pièces d'horlogerie multifonctions, les aiguilles doivent pouvoir se déplacer non seulement en avant, mais également en arrière, selon les variations de la grandeur à indiquer. De plus, les aiguilles d'une pièce d'horlogerie multifonction doivent être capables de changer rapidement de position vers l'avant, ou vers l'arrière, lors d'un changement de fonction. Pour répondre à ces contraintes, les aiguilles des pièces d'horlogerie multifonctions sont, en général, entraînées chacune par son propre moteur. En conséquence, au lieu de l'unique garde-temps interne décrit plus haut, les pièces d'horlogerie multifonctions comportent habituellement un circuit de comptage/décomptage des impulsions de commande du moteur de chaque aiguille. On comprendra d'autre part que les moteurs d'une pièce d'horlogerie multifonction doivent répondre à des sollicitations considérablement plus importantes. Dans ces conditions, le risque de décalage, ou autrement dit de désynchronisation des aiguilles, est également nettement plus élevé pour une pièce d'horlogerie multifonction que pour une autre.

Pour remédier aux problèmes qui viennent d'être décrits, il est connu de compléter le simple comptage/décomptage des impulsions de commande des moteurs par une détection de la position réelle des aiguilles. Le document de brevet EP 0 841 538 notamment décrit une pièce d'horlogerie qui comprend un mouvement horloger entraînant un affichage analogique. Ce mouvement comporte une roue solidaire en rotation d'une des aiguilles, et un capteur magnétique qui est prévu pour détecter la position de cette roue. Afin de permettre cette détection, le plateau de la roue est recouvert par endroit d'un film magnétique qui définit un motif complexe. De telle sorte que le capteur magnétique fournit un signal 1 ou 0 selon qu'il se trouve en regard d'un endroit recouvert de film magnétique ou non. La pièce d'horlogerie comprend encore des moyens électroniques pour déterminer, à partir de la suite de 1 et de 0, si la position de l'aiguille correspond bien à la position théorique. Le dispositif décrit dans ce dernier document présente certains inconvénients. En particulier, la détection de la perte d'une pas ne peut se faire que rétrospectivement. D'autres part, l'opération de recouvrir le plateau d'une roue avec un motif découpé dans un film magnétique, ne peut qu'augmenter les coûts de production.

Le document de brevet EP 0 952 426 décrit une autre solution qui s'adresse au même problème technique. Ce document décrit également un mouvement horloger comportant une roue solidaire en rotation d'une des aiguilles. Cette roue est constituée d'un plateau qui présente au moins une ouverture située dans la région intermédiaire entre l'axe de rotation et la circonférence. La pièce d'horlogerie comprend encore un dispositif de détection de la position angulaire de cette roue. Ce dispositif comprend un capteur inductif, ou capacitif, agencé de manière à ce qu'il se trouve directement au dessous de l'ouverture dans le plateau lorsque la roue occupe une position angulaire particulière. Ce capteur est sensible à la variation de la quantité de métal se trouvant à proximité immédiate. L'amplitude du signal détecté par le capteur varie donc selon qu'il se trouve en regard d'un segment plein ou, au contraire, de l'ouverture dans le plateau de la roue. Le dispositif comprend encore une mémoire pour enregistrer l'amplitude du signal après chaque pas et des moyens électroniques de traitement des données pour déterminer rétrospectivement, à partir des données enregistrées, l'instant auquel l'ouverture dans le plateau se trouvait directement en dessus du capteur.

La solution antérieure qui vient d'être décrite présente également certains défauts. En particulier, la roue dont on détecte la position angulaire tourne au même rythme qu'une aiguille. Or, dans le cas où le plateau de cette roue ne comporte qu'une seule ouverture, la position angulaire de la roue, ou de l'aiguille, n'est détectée qu'une fois par tour. On sait que dans les pièces d'horlogerie habituelles, une aiguille est prévue pour effectuer au minimum 60 pas par tour, Il peut donc être nécessaire d'attendre 60 pas avant de pouvoir vérifier la position de celle-ci. D'autre part, l'amplitude de la rotation d'une aiguille correspondant à un seul pas est très limitée (six degrés dans le meilleur des cas). Dans ces conditions, l'intensité du signal détecté par le capteur ne change que de façon infime entre un pas et le suivant, et il n'est pas possible de détecter de manière fiable l'instant exacte du passage de l'ouverture directement en dessus du capteur. C'est la raison pour laquelle, selon ce document antérieur, la détermination de la position ne se fait pas en temps réel, mais rétrospectivement.

Le document de brevet EP 1 662 343 décrit une pièce d'horlogerie comportant un détecteur optique d'une position de référence. Comme les précédentes, cette pièce d'horlogerie comporte un mouvement horloger comprenant une roue solidaire en rotation d'une des aiguilles. Cette roue engrène avec le pignon d'un mobile intermédiaire qui est, lui-même, entraîné par un moteur pas à pas. Les rapports d'engrenage sont tels que le mobile intermédiaire effectue un nombre entier de rotations lors de chaque tour de l'aiguille. La roue solidaire de l'aiguille et la roue du mobile intermédiaire se chevauchent partiellement. Ces deux roues sont chacune formées d'un plateau présentant une ouverture réalisée dans la zone de chevauchement des deux roues. Dans ces conditions, les ouvertures des deux roues se trouvent en positions superposées exactement une fois lors de chaque révolution de la roue solidaire de l'aiguille. Cette coïncidence périodique de la position des deux ouvertures définit la position de référence de l'aiguille. Un détecteur optique est encore disposé à l'endroit où les positions des deux ouvertures coïncident. Le détecteur optique est formé d'une source lumineuse et d'un photo-détecteur disposés de part et d'autre des deux roues de manière à ce que la lumière de la source lumineuse ne puisse pas atteindre le photo-détecteur, sauf lorsque les deux ouvertures sont dans le prolongement l'une de l'autre. Le signal fournit par le détecteur optique est utilisé pour déterminer l'instant correspondant au passage de l'aiguille dans sa position de référence.

Contrairement à ce qui est le cas pour la roue solidaire de l'aiguille, chaque pas du moteur produit un déplacement relativement important de l'ouverture de la roue intermédiaire. Dans ces conditions, l'intensité du signal détecté par le capteur passe pratiquement du tout au rien entre un pas du moteur et le suivant. Il est donc, en principe, possible de détecter en temps réel l'instant exacte du passage de l'aiguille dans sa position de référence. Il n'en demeure pas moins que la position de référence n'est détectée qu'une fois par tour de l'aiguille. Comme avec le mouvement horloger du document précédent, il peut donc être nécessaire d'attendre que le moteur ait accompli 60 pas, sinon plus, avant de pouvoir vérifier la position de l'aiguille.

L'abrégé du document JP 58131583 décrit une pièce d'horlogerie qui comprend un mouvement horloger à aiguilles. La pièce d'horlogerie comprend un dispositif de détection de la position angulaire d'une des aiguilles. Ce dispositif comprend un aimant solidaire de l'aiguille, et une série de contacts Reed disposés autour de la circonférence du cadran et séparés les uns des autres par un intervalle correspondant à deux pas de l'aiguille. Si l'on admet que l'aiguille accomplit 60 pas par tour, la pièce d'horlogerie devra comporter 30 contacts Reed. Une telle caractéristique conduit à une augmentation des coûts de production et ne convient qu'à des pièces d'horlogerie de relativement grande taille.

L'abrégé du document de brevet JP2003107174 décrit une pièce d'horlogerie dans laquelle un moteur pas à pas est muni de moyens électroniques de détection prévus pour vérifier, après chaque impulsion du circuit de commande, que le moteur à bien accompli un pas. Une telle solution présente également certains inconvénients. En effet, le champ électromagnétique dans le moteur d'une pièce d'horlogerie est produit à la fois par les impulsions électriques alimentant les bobines et par l'aimant tournant avec le rotor. Dans ces conditions, la perte d'un pas par le moteur, ne conduit qu'à une variation relativement modérée du signal détecté par les moyens électroniques. Ainsi, la solution proposée dans ce document antérieur nécessite la mise en oeuvre d'un système de détection suffisamment sensible et donc relativement sophistiqué. D'autre part, une perturbation électromagnétique se produisant dans le voisinage de la montre risque d'occasionner des erreurs au niveau du système de détection.

Un but de la présente invention est de remédier aux inconvénients qui viennent d'être décrits en fournissant une pièce d'horlogerie conforme à la revendication 1.

On comprendra que, dans l'invention, les moyens de comparaisons sont en mesure de vérifier la position réelle de la roue intermédiaire au moins une fois par tour effectué par celle-ci. D'autre part, on sait que, dans un rouage démultiplicateur, le nombre de tours de rotor nécessaires pour faire effectuer un tour complet à une roue intermédiaire est inférieur au nombre de tours nécessaires pour faire effectuer un tour complet à l'indicateur mobile. Dans ces conditions, le délai entre la perte accidentelle d'un pas, et la détection de cet incident, est réduit par rapport aux dispositifs de l'art antérieur.

Selon une variante avantageuse de la présente invention, le nombre de tours de rotor nécessaires pour faire effectuer un tour complet à la roue intermédiaire ne dépasse pas 10. Grâce à cette caractéristique, la détection d'un éventuel désaccord entre la position réelle de la roue intermédiaire et l'état des moyens de comptage s'effectue avec un retard ne dépassant pas la durée de dix tours de rotor (presque en temps réel).

Selon une autre variante avantageuse de la présente invention, la détection d'au moins une position angulaire de référence utilise un aimant solidaire de la roue intermédiaire et occupant une position décentrée par rapport à l'axe de celle-ci, et un capteur magnétique disposé en regard d'un point de la trajectoire de l'aimant de manière à détecter le passage de celui-ci.

Selon encore une autre variante avantageuse de la présente invention, le moteur de la pièce d'horlogerie est un moteur pas à pas, et la pièce d'horlogerie comprend encore des premiers moyens de mémoire prévu pour mémoriser les signaux fournis par les moyens de détection sur une période correspondant à au moins un tour complet de la roue intermédiaire, et en ce que les moyens d'identification et de comparaison sont prévus pour établir, sur la base des signaux mémorisés par les premiers moyens de mémoires, une correspondance entre un état particulier des premiers moyens de comptage et la position angulaire de référence. Comme le nombre de pas-moteur nécessaires pour faire effectuer un tour complet à la roue intermédiaire est limité, la taille de la mémoire nécessaire pour mettre en oeuvre cette caractéristique est tout à fait raisonnable.

Selon encore une autre variante avantageuse de la présente invention, un tour complet de la roue intermédiaire correspond à au moins trois pas-moteur. En effet, contrairement à ce qui serait le cas si un tour complet correspondait à seulement deux pas-moteur, lorsque le moteur fait au moins trois pas par tour, il est possible de distinguer un pas en avant d'un pas en arrière.

D'autres caractéristiques et avantages de la présente invention apparaîtront à la lecture de la description qui va suivre, donnée uniquement à titre d'exemple non limitatif, et faite en référence aux dessins annexés dans lesquels :
la figure 1 est une vue en coupe d'un mouvement horloger faisant partie d'une pièce d'horlogerie selon un mode de réalisation de l'invention ;
la figure 2A est une représentation schématique d'une roue intermédiaire du mouvement horloger de la figure 1, illustrant les quatre positions que peut occuper l'aimant porté par cette roue sous l'action du moteur pas à pas ;
la figure 2B est un tableau représentant la succession de 1 et de 0 fournie par le capteur magnétique dans différents cas ;
la figure 3 est un schéma de principe des moyens de contrôle des pas du moteur, ainsi que des moyens de rattrapage des pas perdu.

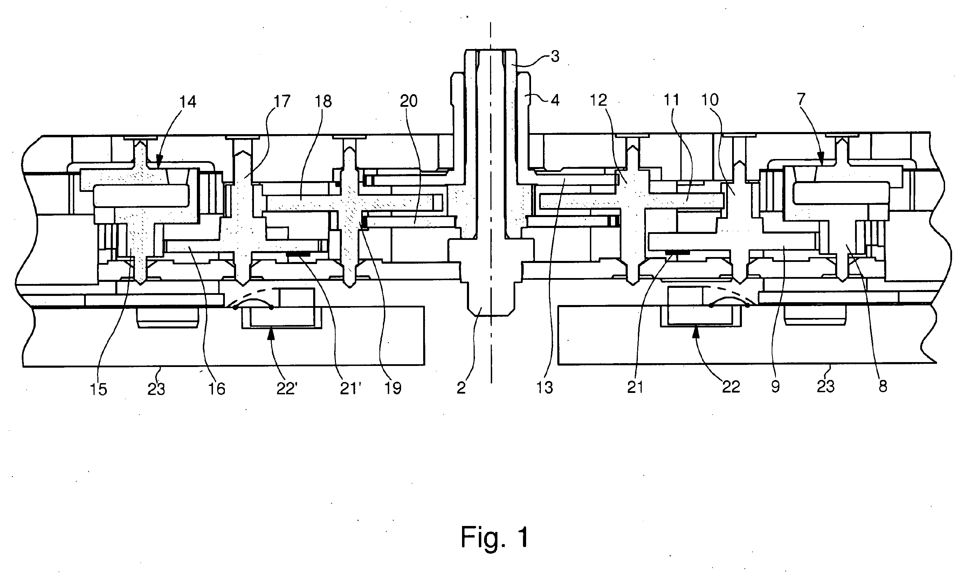

La pièce d'horlogerie dont le mouvement est représenté en coupe sur la figure 1 comporte un axe central 2 autour duquel tourne deux canons (référencés 3 et 4) qui sont montés concentriquement et prévus pour porter respectivement l'aiguille des minutes et l'aiguille des heures (non représentées). Dans le mouvement de la figure 1, les deux aiguilles sont entraînées indépendamment l'une de l'autre par deux moteurs (dont seul les rotors sont représentés et respectivement référencés 7 et 14 sur la figure 1). Ces moteurs pas à pas sont prévus pour être commandés aussi bien vers l'arrière que l'avant, et le mouvement horloger qu'ils équipent convient donc notamment à une utilisation dans des pièces d'horlogerie multifonctions. Le premier moteur 7 entraîne l'aiguille des heures par l'intermédiaire d'un premier rouage démultiplicateur formé du pignon 8 du moteur, de la roue intermédiaire 9 et de son pignon 10, de la roue 11 et de son pignon 12 et, enfin, de la roue des heures 13. Le deuxième moteur 14 entraîne l'aiguille des minutes par l'intermédiaire d'un deuxième rouage démultiplicateur formé du pignon 15 du moteur, de la roue intermédiaire 16 et de son pignon 17, de la roue 18 et de son pignon 19 et, enfin, de la roue des minutes 20. La suite de la description va se concentrer sur la première chaîne cinématique qui relie le moteur 7 à l'aiguille des heures. On comprendra toutefois que les mêmes explications s'appliquent également à la deuxième chaîne cinématique entraînant la roue des minutes.

Le moteur entraînant l'aiguille des heures est un moteur pas à pas dont le rotor 7 est conçu pour effectuer une rotation complète à chaque pas. Le rapport d'engrenage entre la roue intermédiaire 9 et le pignon 8 du moteur et de 4:1. La roue intermédiaire 9 est donc prévue pour tourner au rythme d'un tour tous les 4 pas-moteur. Précisons encore que, dans le mouvement décrit, la roue des heures et la roue des minutes sont toutes deux prévues pour effectuer un tour tous les 180 pas-moteur.

On voit encore sur la figure 1 un petit aimant 21 qui est fixé sous le plateau de la roue intermédiaire 9. L'aimant 21 est fixé à proximité du bord extérieur de la roue, mais en retrait de la denture de celle-ci. L'aimant est donc solidaire de la roue intermédiaire, et il passe une fois par tour à la verticale d'un micro-contacteur Reed (désigné ci-après par l'abréviation MR et référencé 22 sur les figures). Le MR fait partie des composants électroniques montés sur un circuit imprimé 23, lui-même fixé sous le pont-moteur. La position du MR 22 est choisie de manière à ce que l'aimant 21 passe directement en regard de lui une fois à chaque tour de la roue intermédiaire 9. Précisons encore que, dans le présent mode de réalisation, la roue intermédiaire 16 faisant partie du train d'engrenages qui entraîne la roue des minutes porte un deuxième aimant 21' qui est prévu pour actionner un deuxième MR référencé 22'.

On comprendra que le MR décrit dans le présent exemple doit être de petite dimension. Toutefois, il existe des MR suffisamment petit pour convenir à de telles applications. On peut citer en particulier le MicroReed-14 développé par la société ASULAB SA, CH-2074 Marin, Suisse.

Un contacteur Reed est un contact sensible au champ magnétique. Ce contact se ferme en présence d'un champ suffisamment intense, mais reste ouvert si le champ ne dépasse pas un certain seuil. Un contacteur Reed se prête donc à être utilisé comme capteur magnétostatique pour détecter la présence d'un champ magnétique dont l'intensité dépasse une certaine valeur. La pièce d'horlogerie dont le mouvement vient d'être décrit comporte donc deux MR référencés 22 et 22'. Elle comporte également des moyens électroniques qui sont reliés aux MR et qui forment avec ceux-ci des moyens de détection d'un champ magnétique. Ces moyens de détection du champ magnétique sont prévus pour fournir un signal binaire dont la valeur dépend de l'état ouvert ou fermé du contact. Dans la suite de cette description, on attribuera la valeur « 1 » au signal fourni par les moyens de détection lorsque le contact est fermé, et on attribuera la valeur « 0 » au signal fourni par les moyens de détection lorsque le contact est ouvert.

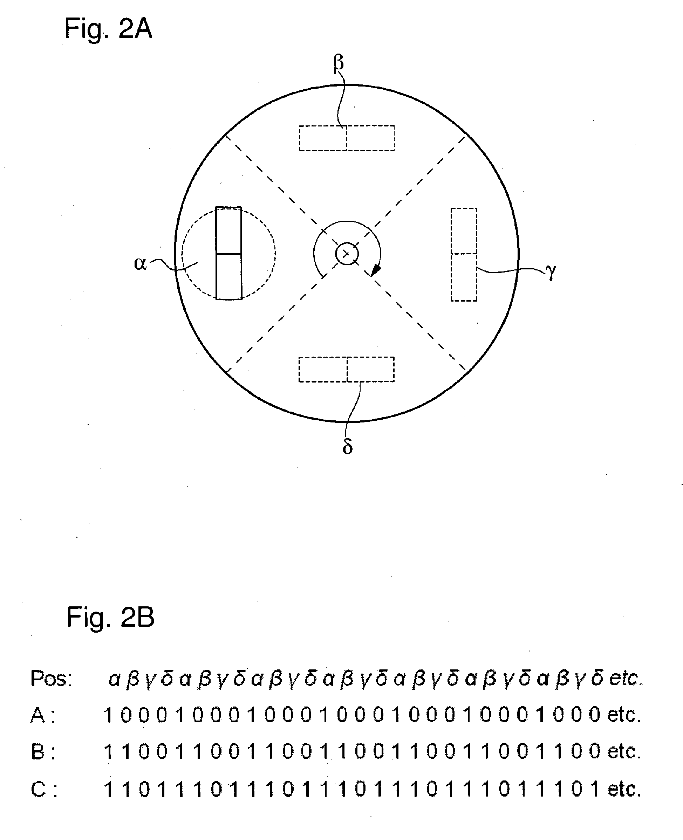

Conformément à la convention qui précède, l'information fournie par les moyens de détection du champ magnétique peut être assimilée à une suite de 1 et de 0 reflétant l'état du capteur après chaque pas de la commande moteur. Comme la roue intermédiaire 9 réalise un tour complet tous les quatre pas-moteur, la séquence de 1 et de 0 devrait se répéter régulièrement avec une période de quatre pas, pour autant qu'il n'y ait pas d'inversion du sens de la marche. Rappelons que, selon la présente invention, les moyens de détection fournissent un signal ayant une première valeur lorsque la roue intermédiaire occupe une première position angulaire et fournissent un signal ayant une seconde valeur, différente de la première, lorsque la roue intermédiaire occupe une deuxième position angulaire. La figure 2 représente les quatre positions α, β, γ et δ que l'aimant 21 peut occuper dans le mode de réalisation qui fait l'objet du présent exemple. Lorsque l'aimant 21 occupe la position α, il se trouve directement au dessus du MR 22. Dans cette position, l'intensité du champ magnétique au niveau du MR est maximum, et le contacteur doit donc être fermé dans cette position. La valeur du signal fourni par les moyens de détection lorsque l'aimant occupe la position α est donc « 1 ». A l'inverse, lorsque l'aimant 21 occupe la position γ, la distance le séparant du MR 22 est maximum, et le contacteur doit donc être ouvert dans cette deuxième position. La valeur du signal fourni par les moyens de détection lorsque l'aimant occupe la position γ est donc « 0 ».

En ce qui concerne la valeur prise par le signal dans les deux autres positions de l'aimant (les positions β et δ), un certain nombre de variantes peuvent se présenter. En effet, dans ces deux dernières positions, l'intensité du champ magnétique au niveau du MR est intermédiaire entre l'intensité correspondant à la position α et celle correspondant à la position γ. A priori, le signal fourni par les moyens de détection peut donc prendre aussi bien la valeur « 0 » que la valeur « 1 ». Le tableau de la figure 2B décrit trois variantes conformes à la présente invention. Dans la première de ces variantes (ligne A du tableau), on voit que le MR n'est fermé que dans la position α, quand l'aimant 21 se trouve directement au dessus de lui. Le MR demeure ouvert dans les trois autres positions de l'aimant. Ces positions correspondent donc à trois 0 successifs. La variante A correspond à l'utilisation d'un aimant relativement faible qui parvient à fermer le contact uniquement s'il se trouve à proximité immédiate de celui-ci. Dans la deuxième variante représentée (ligne B), on voit que le MR est fermé dans les positions α et β de l'aimant 21, et que le MR est ouvert dans les positions γ et δ. L'intensité du champ magnétique à l'endroit du MR est en principe la même en position β et en position δ. Toutefois, en raison de l'hystérèse, l'intensité critique du champ magnétique qui permet juste de fermer le MR est plus élevée que l'intensité critique qui permet juste de l'ouvrir. C'est la raison pour laquelle la même intensité du champ magnétique suffit à maintenir le contact fermé lorsque l'aimant passe de la position α à la position β, mais ne suffit pas à refermer le contact lorsque l'aimant passe de la position γ à la position δ. Précisons que le tableau de la figure 2B ne prend pas en considération la possibilité d'une inversion du sens de la marche. Dans une telle situation où le moteur tourne en arrière, on peut dire que la variante B s'inverse. Autrement dit, le contact est fermé dans la position δ et ouvert dans la position β. Toutefois, le sens de la rotation n'a pas d'effet sur le contact dans les positions α et γ. Finalement, dans la troisième variante représentée (ligne C), on voit que les positions δ, α et β de l'aimant 21 correspondent à trois 1 successifs, et que le seul 0 est associé avec la position γ. On comprendra que le cas E correspond à l'utilisation d'un aimant relativement fort.

Pour réaliser la pièce d'horlogerie qui fait l'objet du présent exemple, On dimensionne de préférence les composants de manière à ce que les moyens de détection fournissent un signal qui est conforme à la variante B. Toutefois, il est possible que certains exemplaires de cette pièce d'horlogerie s'avèrent correspondre à la variante A ou à la variante C. En effet, si l'on travaille avec des tolérances usuelles, un exemplaire dimensionne selon la variante B a une probabilité réduite, mais non nul, de présenter finalement les caractéristiques de la variante A ou de la variante C. Selon une caractéristique avantageuse de la présente invention, ce genre de variation entre exemplaires ne constitue pas un problème. En effet, les moyens de détection d'une position angulaire de référence de la roue intermédiaire peuvent se baser sur le principe suivant. En présence de trois 1 consécutifs (variante C), le deuxième de ces 1 correspond à la position α de l'aimant 21. En présence de deux 1 consécutifs (variante B), le premier de ces 1 correspond à la position α de l'aimant. Dans le cas où les 1 ne sont pas consécutifs (variante A), ces 1 isolés correspondent à la position α de l'aimant.

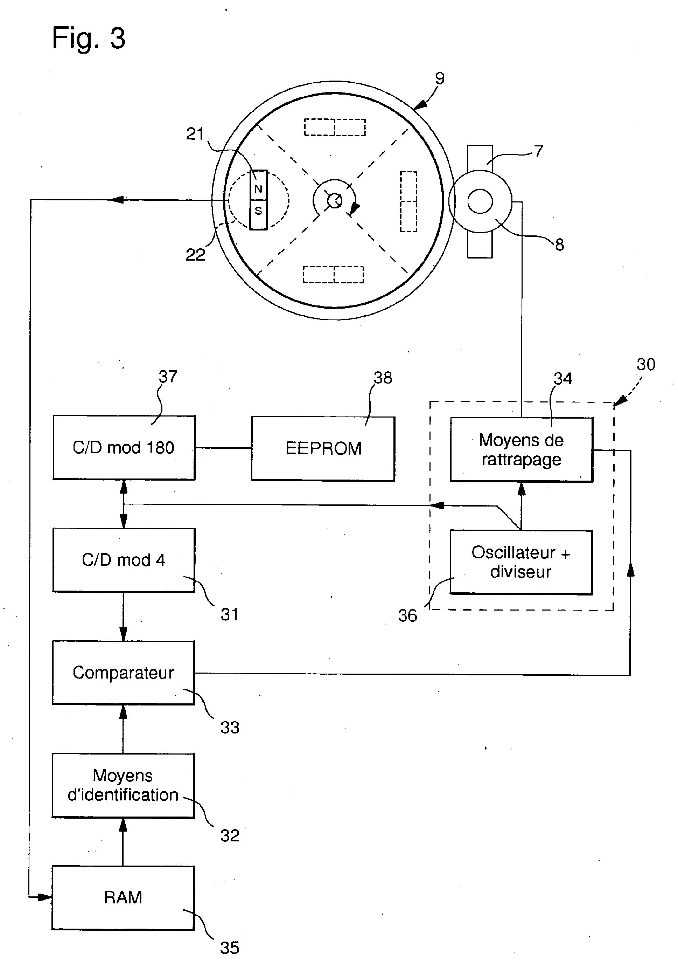

La figure 3 est un schéma de principe des moyens de commande, de contrôle et de correction de la position de la roue intermédiaire. On a vu que la pièce d'horlogerie du présent exemple comporte, en fait, des moyens de détection pour les positions de deux roues intermédiaires, l'une associée à l'aiguille des heures et l'autre à l'aiguille des minutes. Les explications qui suivent sont données en se référant uniquement à la roue intermédiaire 9 associée à l'aiguille des heures. On comprendra toutefois que les mêmes explications s'appliquent également à la détection de la position de l'autre roue intermédiaire 16.

On voit sur le schéma de la figure 3, la roue intermédiaire 9 qui est entraînée par le pignon 8 du moteur 7. De façon connue, le moteur 7 obéit à des impulsions fournies par un circuit de commande 30 qui comprend un oscillateur à quartz et un diviseur 36. Le circuit de commande est prévu pour faire tourner le rotor du moteur en avant ou en arrière pas à pas. On voit également sur le schéma un compteur/décompteur 31 qui reçoit également les signaux fournis au moteur par le circuit de commande 30. Le compteur/décompteur 31 est prévu pour être incrémenté d'une unité à chaque fois que le circuit de commande produit une impulsion commandant un pas en avant, et décrémenté d'une unité chaque fois que le circuit de commande produit une impulsion commandant un pas en arrière. Le compteur/décompteur 31 est un compteur modulo 4. Dans ces conditions, en l'absence d'incidents, il doit exister une correspondance univoque entre les quatre états possibles du compteur 31 et les quatre positions occupées par la roue intermédiaire 9.

Le schéma de la figure 3 montre encore un capteur magnétique à deux états qui est constitué par le contacteur Reed 22 et les moyens d'alimentation qui lui sont associés. Le capteur magnétique produit un signal formé d'une suite de 1 et de 0, qui correspondent à l'état fermé ou ouvert du MR après chaque impulsion du circuit de commande 30. Le signal du capteur magnétique est fourni à une mémoire RAM référencée 35, qui conserve l'enregistrement des N dernières valeurs prises par le signal. Comme, dans le présent exemple, la séquence de signaux se répète tous les quatre pas, il est possible de limiter l'enregistrement aux quatre dernières valeurs. À partir de cette information les moyens d'identification 32 sont en mesure d'identifier le pas correspondant à la position de référence α de la roue intermédiaire 9. Conformément à ce qui a été expliqué plus haut, les moyens d'identification se basent par exemple sur le principe suivant. En présence de trois 1 consécutifs, le deuxième de ces 1 correspond à la position α de la roue intermédiaire. En présence de deux 1 consécutifs, le premier de ces 1 correspond à la position α de la roue intermédiaire 9. Dans le cas où les 1 ne sont jamais consécutifs, ces 1 isolés correspondent à la position α de la roue intermédiaire. Selon une variante avantageuse, en plus de la position α, les moyens d'identification 32 son prévus pour identifier également la position γ de la roue intermédiaire en analysant les suites de 0 consécutifs selon le même principe.

Des moyens de comparaison 33 sont encore prévus pour comparer la position de la roue intermédiaire 9 déterminée par les moyens d'identification 32 avec la position dans laquelle cette roue devrait théoriquement se trouver d'après le compteur/décompteur 31. Un éventuel désaccord entre ces deux informations serait l'indication de la perte d'au moins un pas par le moteur. Dans ces conditions, les moyens de comparaisons 33 vont, de manière connue de l'homme du métier, envoyer un signal à un générateur d'impulsions supplémentaires 34 de manière faire rattraper au moteur les pas qu'il a perdus. Conformément à ce qui vient d'être décrit, les moyens d'identification 32 identifient rétrospectivement le pas correspondant à la position de α. Toutefois, il suffit d'attendre le premier 0 succédant à une suite de 1 pour savoir à quel pas correspondait la position α de la roue intermédiaire 9. En l'absence d'une inversion du sens de rotation du moteur, le délai d'identification ne dépasse donc pas la durée deux pas. Dans le présent exemple, ce délai correspond à une erreur de positionnement de l'aiguille des heures de 4°. Les moyens d'identification travaillent donc pratiquement en temps réel.

On voit sur le schéma de la figure 3 que la pièce d'horlogerie du présent exemple comprend un deuxième compteur/décompteur 37. Il s'agit d'un compteur/décompteur modulo 180. Comme le compteur 31, le compteur 37 est incrémenté ou décrémenté d'une unité par chaque impulsion fournie par le circuit de commande 30. Il existe donc une correspondance univoque entre les 180 états possibles du compteur 37 et les 180 positions occupées par l'aiguille autour du cadran. On voit encore que le compteur/décompteur 37 est relié à une mémoire non-volatile 38. La fonction de la mémoire non-volatile 38 est de sauvegarder la position de l'aiguille des heures, par exemple, lorsque la pile (non représentée) qui alimente la pièce d'horlogerie en énergie doit être changée. Ainsi, dès que la tension d'alimentation fournie par la pile tombe au dessous d'une valeur seuil, le compteur/décompteur 37 transfert son contenu à la mémoire non-volatile EEPROM 38. Dès que la pile de la montre à été remplacée, le compteur 37 lit la position de l'aiguille, dans la mémoire non-volatile 38, et reprend ainsi l'état correspondant à la position réelle de l'aiguille. À ce stade, même si la montre a pris du retard, la correspondance entre la position des aiguilles et l'état du compteur 37 est conservée. Il suffit donc ensuite au porteur de la montre d'utiliser la tige de commande d'une manière connue pour remette la montre à l'heure.

Les caractéristiques qui viennent d'être décrites sont particulièrement avantageuses quand, comme dans le cas présent, elles sont associées à une montre dans laquelle deux moteurs au moins entraînent chacun une aiguille indépendante. En effet, avec de telles montres, il est notamment possible qu'une défaillance de la pile se produise à un moment où les aiguilles se sont désynchronisées l'une de l'autre pour afficher une information autre que l'heure. Dans ces conditions, la sauvegarde de la position de chacune des aiguilles dans la mémoire non-volatile permet de remettre la montre à l'heure sans devoir avoir recours une opération de resynchronisation des aiguilles.

L'homme du métier comprendra que pour que l'état du compteur/décompteur 37 corresponde bien à la position de l'aiguille des heures, il est nécessaire d'effectuer préalablement une initialisation de la position de cette aiguille. Toutefois, l'initialisation n'a pas besoin d'être refaite suite à chaque changement de pile puisque l'état du compteur/décompteur 37 est sauvegardé dans la mémoire non-volatile 38. Une seule opération d'initialisation peut donc suffire à assurer le fonctionnement de la montre pour toute sa durée de vie.

On comprendra d'autre part que le schéma de la figure 3 est un schéma de principe (fonctionnel). Les différentes boîtes qui figurent dans le schéma ne correspondent donc en général pas à des dispositifs distincts. Dans la variante préférée du mode réalisation décrit, toutes les tâches décrites en référence à la figure 3 sont, en fait, accomplies par un unique microcontrôleur programmé en conséquence et intégré à la pièce d'horlogerie.

On comprendra en outre que diverses modifications et/ou améliorations évidentes pour un homme du métier peuvent être apportées au mode de réalisation qui fait l'objet de la présente description sans sortir du cadre de la présente invention définie par les revendications annexées. En particulier, au lieu d'être incrémenté par les impulsions de commande fournies par le diviseur de fréquence 36, le compteur/décompteur 37 pourrait être incrémenté par les moyens d'identification 32 en fonction des signaux fournis par les moyens de détection 22. Cette variante permettrait de garantir que l'état du compteur 37 correspond vraiment à la position de l'aiguille. Et cela même si le moteur 7 et bloqué de sorte que les impulsions de rattrapage sont inopérantes.

D'autre part, la présente invention ne se limite pas à l'utilisation d'un aimant associé à un contacteur Reed. Si la roue intermédiaire 9 est réalisée dans un matériau isolant, il est possible par exemple de remplacer l'aimant fixé à cette roue par une pièce en métal, et de prévoir un capteur inductif ou capacitif pour détecter le passage de la pièce de métal au dessus du détecteur. En revanche, si la roue intermédiaire 9 est réalisée en métal, il possible d'utiliser ces mêmes types de capteurs en association avec une ouverture aménagée dans le plateau de la roue intermédiaire près de sa périphérie.

D'autre part le moteur qui entraîne le rouage démultiplicateur comprenant la roue intermédiaire 9 n'a pas besoin d'être un moteur pas à pas. L'homme du métier comprendra en effet qu'un autre type de moteur, comme un moteur synchrone par exemple, pourrait être utilisé à la place du moteur pas à pas.

## Revendications

1. Pièce d'horlogerie comprenant un mouvement horloger associé à un affichage analogique comprenant au moins un indicateur mobile, ce mouvement horloger comportant au moins un moteur (7) et des moyens de commande (30) délivrant des impulsions prévues pour commander ce moteur, ledit moteur étant prévu pour entraîner ledit indicateur mobile par l'intermédiaire d'un rouage démultiplicateur (8, 9, 10, 11, 12, 13), ledit rouage comprenant une roue intermédiaire (9) entre le moteur (7) et une deuxième roue (13) solidaire de l'indicateur mobile, le rouage démultiplicateur étant prévu pour entraîner la roue intermédiaire d'un angle constant à chaque tour effectué par le moteur, la pièce d'horlogerie comprenant encore des moyens de contrôle (21, 22, 31, 32, 33, 35) prévus pour déterminer si le déplacement réel de l'indicateur mobile correspond au signal délivré par les moyens de commande (30), et des moyens de correction (34) reliés aux moyens de contrôle et prévus pour commander le moteur de façon à corriger la position de l'indicateur mobile,
la pièce d'horlogerie étant **caractérisée en ce que** les moyens de contrôle comprennent des moyens de détection (22) d'au moins une position angulaire de référence de la roue intermédiaire (9), lesdits moyens de détection étant prévus pour fournir un signal ayant une première valeur lorsque la roue intermédiaire occupe ladite position angulaire de référence (α) et pour fournir un signal ayant une seconde valeur, différente de la première, lorsque la roue intermédiaire occupe une deuxième position angulaire (γ), la pièce d'horlogerie étant encore **caractérisée en ce que** les moyens de contrôle comprennent des premiers moyens de comptage (31) des impulsions délivrées par les moyens de commande (30), et des moyens d'identification (32) et de comparaison (33) prévus pour déterminer; sur la base des signaux fournis par les moyens de détection (22), au moins une fois par tour de la roue intermédiaire (9), si la position réelle de la roue intermédiaire correspond bien à l'état des premiers moyens de comptage (31).

2. Pièce d'horlogerie selon la revendication 1, **caractérisée en ce que** l'angle constant, duquel la roue intermédiaire est entraînée à chaque tour effectué par le moteur, est égal à 2Π/N, où N ≤ 10.

3. Pièce d'horlogerie selon la revendication 2, **caractérisée en ce que** le moteur est un moteur pas à pas comprenant un rotor (7) prévu pour tourner d'un angle 2Π/n à chaque pas, de sorte que la roue intermédiaire (9) peut occuper successivement exactement n*N positions angulaires distinctes.

4. Pièce d'horlogerie selon la revendication 3, **caractérisée en ce que** 3 ≤ n*N ≤ 10.

5. Pièce d'horlogerie selon la revendication 4, **caractérisée en ce que** n*N = 4 ou n*N = 6.

6. Pièce d'horlogerie selon l'une des revendications précédentes, **caractérisée en ce que** les moyens de contrôle comprennent des premiers moyens de mémoire (35) prévus pour mémoriser les signaux fournis par les moyens de détection (22) sur une période correspondant à au moins un tour complet de la roue intermédiaire (9), et **en ce que** les moyens d'identification et de comparaison sont prévus pour identifier, sur la base des signaux mémorisés par les premiers moyens de mémoires (35), l'état des premiers moyens de comptage (31) qui correspond à la position angulaire de référence (α).

7. Pièce d'horlogerie selon la revendication 6, **caractérisée en ce que** les moyens d'identification et de comparaison sont prévus pour identifier, en outre, l'état des premiers moyens de comptage (31) qui correspond à la deuxième position angulaire (γ).

8. Pièce d'horlogerie selon l'une des revendications précédentes, **caractérisée en ce que** lesdits moyens de détection d'au moins une position de référence de la roue intermédiaire comprennent un aimant (21) solidaire de la roue intermédiaire (9) et occupant une position décentrée par rapport à ladite roue, de sorte que chaque position angulaire de la roue intermédiaire corresponde à une position distincte de l'aimant, et comprenant encore un capteur magnétique (22) disposé en regard de la roue intermédiaire de manière à ce qu'il fournisse ledit signal ayant une première valeur lorsque l'aimant occupe une première position (α) et qu'il fournisse ledit signal ayant une seconde valeur lorsque l'aimant occupe une deuxième position (γ).

9. Pièce d'horlogerie selon l'une des revendications précédentes, **caractérisée en ce qu'**elle comporte des seconds moyens de comptage (37) des impulsions délivrées par les moyens de commande (30), et des seconds moyens de mémoire (38) pour mémoriser la position de l'indicateur mobile, lesdits seconds moyens de mémoire comprenant une mémoire non-volatile (38) prévue pour conserver un enregistrement de l'état des seconds moyens de comptage (37) lorsque la pièce d'horlogerie cesse de fonctionner.

## Claims

1. Timepiece including a timepiece movement associated with an analogue display including at least one mobile indicator, said timepiece movement including at least one motor (7) and control means (30) delivering pulses for controlling said motor, said motor being provided for driving said mobile indicator via a gear reduction train (8, 9, 10, 11, 12, 13), said train including an intermediate wheel (9) between the motor (7) and a second wheel (13) secured to the mobile indicator, the gear reduction train being provided for driving the intermediate wheel through a constant angle upon each revolution completed by the motor, the timepiece further including checking means (21, 22, 31, 32, 33, 35) for determining whether the real movement of the mobile indicator corresponds to the signal delivered by the control means (30), and correction means (34) connected to the checking means and provided for controlling the motor so as to correct the position of the mobile indicator,
the timepiece being **characterized in that** the checking means include means (22) for detecting at least one angular reference position of the intermediate wheel (9), said detection means being provided for supplying a signal having a first value when the intermediate wheel is occupying said angular reference position (α) and for supplying a signal having a second value, different from the first, when the intermediate wheel is occupying a second angular position (γ), the timepiece being further **characterized in that** the checking means include first means (31) for counting the pulses delivered by the control means (30), and identification (32) and comparison (33) means for determining, on the basis of the signal supplied by the detection means (22), at least one per revolution of the intermediate wheel (9), whether the real position of the intermediate wheel actually corresponds to the state of the first counting means (31).

2. Timepiece according to claim 1, **characterized in that** the constant angle, through which the intermediate wheel is driven upon each revolution completed by the motor, is equal to 2Π/N , where N≤10.

3. Timepiece according to claim 2, **characterized in that** the motor is a stepping motor including a rotor (7) provided for rotating through an angle 2Π/N upon each step, such that the intermediate wheel (9) can successively occupy exactly n*N distinct angular positions.

4. Timepiece according to claim 3, **characterized in that** 3 ≤ n*N ≤ 10.

5. Timepiece according to claim 4, **characterized in that** n*N = 4 or n*N = 6.

6. Timepiece according to any of the preceding claims, **characterized in that** the checking means include first memory means (35) provided for storing the signals supplied by the detection means (22) over a period corresponding to at least on complete revolution of the intermediate wheel (9), and **in that** the identification and comparison means are provided for identifying, on the basis of the signal stored by the first memory means (35), the state of the first counting means (31), which corresponds to the angular reference position (α).

7. Timepiece according to claim 6, **characterized in that** the identification and comparison means are also provided for identifying the state of the first counting means (31) which corresponds to the second angular position (γ).

8. Timepiece according to any of the preceding claims, **characterized in that** said means for detecting at least one reference position of the intermediate wheel include a magnet (21) secured to the intermediate wheel (9) and occupying an off-centre position relative to said wheel, such that each angular position of the intermediate wheel corresponds to a distinct position of the magnet, and further including a magnetic sensor (22) arranged opposite the intermediate wheel such that it supplies said signal having a first value when the magnet is occupying a first position (α) and such that it supplies said signal having a second value when the magnet is occupying a second position (γ).

9. Timepiece according to any of the preceding claims, **characterized in that** it includes second means (37) for counting the pulses delivered by the control means (30), and second memory means (38) for storing the position of the mobile indicator, said second memory means including a non-volatile memory (38) for keeping a record of the state of the second counting means (37) when the timepiece stops operating.

## Patentansprüche

1. Zeitmessgerät, mit einem Uhrwerk, dem eine analoge Anzeige zugeordnet ist, die wenigstens einen beweglichen Zeiger enthält, wobei dieses Uhrwerk wenigstens einen Motor (7) und Steuermittel (30), die Impulse liefern, die dazu vorgesehen sind, diesen Motor zu steuern, umfasst, wobei der Motor dazu vorgesehen ist, den beweglichen Zeiger über ein Untersetzungsgetriebe (8, 9, 10, 11, 12, 13) anzutreiben, wobei das Getriebe ein Zwischenrad (9) zwischen dem Motor (7) und einem mit dem beweglichen Zeiger fest verbundenen zweiten Rad (13) aufweist, wobei das Untersetzungsgetriebe dazu vorgesehen ist, das Zwischenrad bei jeder Umdrehung des Motors um einen konstanten Winkel anzutreiben, wobei das Zeitmessgerät außerdem Kontrollmittel (21, 22, 31, 32, 33, 35) umfasst, die dazu vorgesehen sind, zu bestimmen, ob die wirkliche Verlagerung des beweg-lichen Zeigers dem von den Steuermitteln (30) gelieferten Signal entspricht, und Korrekturmittel (34) umfasst, die mit den Kontrollmitteln verbunden sind und dazu vorgesehen sind, den Motor in der Weise zu steuern, dass die Position des beweglichen Zeigers korrigiert wird,
wobei das Zeitmessgerät **dadurch gekennzeichnet ist, dass** die Kontrollmittel Mittel (22) zum Erfassen wenigstens einer Referenz-Winkelposition des Zwischenrades (9) umfassen, wobei die Erfassungsmittel dazu vorgesehen sind, ein Signal zu liefern, das einen ersten Wert hat, wenn das Zwischenrad die Referenz-Winkelposition (α) einnimmt, und ein Signal zu liefern, das einen zweiten Wert hat, der von dem ersten Wert verschieden ist, wenn das Zwischenrad eine zweite Winkelposition (γ) einnimmt, wobei das Zeitmessgerät außerdem **dadurch gekennzeichnet ist, dass** die Kontrollmittel erste Mittel (31) zum Zählen der von den Steuermitteln (30) ausgegebenen Impulse und Identifizierungsmittel (32) sowie Vergleichsmittel (33) umfassen, um anhand der von den Erfassungsmitteln (22) gelieferten Signale wenigstens einmal pro Umdrehung des Zwischenrades (9) festzustellen, ob die wirkliche Position des Zwischenrades dem Zustand der ersten Zählmittel (31) tatsächlich entspricht.

2. Zeitmessgerät nach Anspruch 1, **dadurch gekennzeichnet, dass** der konstante Winkel, um den das Zwischenrad bei jeder Umdrehung des Motors angetrieben wird, gleich 2π/N ist, wobei N ≤ 10 ist.

3. Zeitmessgerät nach Anspruch 2, **dadurch gekennzeichnet, dass** der Motor ein Schrittmotor ist, der einen Rotor (7) umfasst, der dazu vorgesehen ist, sich bei jedem Schritt um einen Winkel 2π/n zu drehen, derart, dass das Zwischenrad (9) nacheinander exakt n × N verschiedene Winkelpositionen einnehmen kann.

4. Zeitmessgerät nach Anspruch 3, **dadurch gekennzeichnet, dass** 3 ≤ n × N ≤ 10 ist.

5. Zeitmessgerät nach Anspruch 4, **dadurch gekennzeichnet, dass** n × N = 4 oder n × N = 6 ist.

6. Zeitmessgerät nach einem der vorhergehenden Ansprüche, **dadurch gekennzeichnet, dass** die Kontrollmittel erste Speichermittel (35) umfassen, die dazu vorgesehen sind, die von den Erfassungsmitteln (22) gelieferten Signale über eine Periode zu speichern, die wenigstens einer vollständigen Umdrehung des Zwischenrades (9) entspricht, und dass die Identifizierungs- und Vergleichsmittel dazu vorgesehen sind, anhand der von den ersten Speichermitteln (35) gespeicherten Signale den Zustand der ersten Zählmittel (31) zu identifizieren, der der Referenz-Winkelposition (α) entspricht.

7. Zeitmessgerät nach Anspruch 6, **dadurch gekennzeichnet, dass** die Identifizierungs- und Vergleichsmittel dazu vorgesehen sind, außerdem den Zustand der ersten Zählmittel (31) zu identifizieren, der der zweiten Winkelposition (γ) entspricht.

8. Zeitmessgerät nach einem der vorhergehenden Ansprüche, **dadurch gekennzeichnet, dass** die Mittel zum Erfassen wenigstens einer Referenzposition des Zwischenrades einen mit dem Zwischenrad (9) fest verbundenen Magneten (21) umfassen, der eine in Bezug auf das Rad dezentrierte Position einnimmt, derart, dass jede Winkelposition des Zwischenrades einer anderen Position des Magneten entspricht, und außerdem einen Magnetsensor (22) umfassen, der gegenüber dem Zwischenrad angeordnet ist, derart, dass er das Signal liefert, das einen ersten Wert hat, wenn der Magnet eine erste Position (α) einnimmt, und dass er das Signal liefert, das einen zweiten Wert hat, wenn der Magnet eine zweite Position (γ) einnimmt.

9. Zeitmessgerät nach einem der vorhergehenden Ansprüche, **dadurch gekennzeichnet, dass** es zweite Mittel (37) zum Zählen der von den Steuermitteln (30) ausgegebenen Impulse und zweite Speichermittel (38) zum Speichern der Position des beweglichen Zeigers umfasst, wobei die zweiten Speichermittel einen nichtflüchtigen Speicher (38) umfassen, der dazu vorgesehen ist, eine Aufzeichnung des Zustandes der zweiten Zählmittel (37) zu halten, wenn der Betrieb des Zeitmessgeräts endet.
